# EUROPEAN PATENT SPECIFICATION

(11) **EP 1 488 924 B1**
(45) Date of publication and mention of the grant of the patent: **26.04.2006**
(21) Application number: 04253682.1
(22) Date of filing: 18.06.2004
(51) Int. Cl.: B32B 27/32

(54) **Food packaging**
Lebensmittelverpackung
Emballage alimentaire

(30) Priority: 18.06.2003 GB 0314189
(43) Date of publication of application: 22.12.2004
(60) Divisional application: 06003750.4
(73) Proprietor: BOREALIS A/S, 3960 Stathelle (NO); Tommen Gram Holding A/S, 7042 Trondheim (NO)
(72) Inventor: Kvamme, Lars Inge, 3970 Langesund (NO); Müller, Finn Robert, 7032 Trondheim (NO)
(74) Representative: Campbell, Neil Boyd

(56) References cited:
- EP-A- 0 705 687
- EP-A- 1 238 796
- WO-A-01/45938
- WO-A-01/60909
- US-A- 6 033 775
- US-A- 6 083 611
- US-A1- 2002 006 482
- DATABASE WPI Section Ch, Week 199943 Derwent Publications Ltd., London, GB; Class A17, AN 1999-511993 XP002296661 & JP 11 221886 A (MONTEL JPO KK) 17 August 1999 (1999-08-17)
- DATABASE WPI Section Ch, Week 200224 Derwent Publications Ltd., London, GB; Class A92, AN 2002-182675 XP002296662 & JP 2001 353820 A (SHOWA DENKO KK) 25 December 2001 (2001-12-25)
- DATABASE WPI Section Ch, Week 199937 Derwent Publications Ltd., London, GB; Class A17, AN 1999-438480 XP002296663 & JP 11 179860 A (SEKISUI CHEM IND CO LTD) 6 July 1999 (1999-07-06)
- DATABASE WPI Section Ch, Week 199807 Derwent Publications Ltd., London, GB; Class A14, AN 1998-071262 XP002296664 & JP 09 309175 A (SEKISUI CHEM IND CO LTD) 2 December 1997 (1997-12-02)
- DATABASE WPI Section Ch, Week 199851 Derwent Publications Ltd., London, GB; Class A17, AN 1998-602642 XP002296665 & JP 10 272747 A (KOHJIN CO LTD) 13 October 1998 (1998-10-13)
- DATABASE WPI Section Ch, Week 199950 Derwent Publications Ltd., London, GB; Class A17, AN 1999-584919 XP002296666 & JP 11 254611 A (RIKEN VINYL KOGYO KK) 21 September 1999 (1999-09-21)

## Description

This invention relates to a method for packaging food, in particular to a method using a multilayer film comprising polyethylene and polypropylene components, especially a multilayer film comprising polyethylene and polypropylene layers capable of packaging fresh foods such as meat and seafood.

The packaging of fresh food products, especially seafood and in particular fish, is a special challenge for the food packager. Many fresh foods are moist (or can become wet under pressure) and may also contain other natural liquids such as oils and sugary fluids. Fresh animal products will also contain blood and fats and fish will usually be wet and hence covered with sea or freshwater, blood, fish oils, ice etc. The presence of all these liquid contaminants makes fresh produce more problematic to package than dry food materials such as pasta or rice. The packaging process and materials for use therein must therefore be designed to ensure not only that the food retains its quality but also that none of the substances mentioned above can leak from the packaging or prevent successful packaging, e.g. prevent sealing being achieved. It is also essential that the polymer is not degraded or dissolved at all by the liquids present in the product being packaged (i.e. there is no migration from the polymer film to the fresh produce).

Moreover, most fresh produce needs to be carefully handled and packaged to maintain the integrity of the product since products such as fruit and fish tend to damage easily. Much care is therefore needed when packaging fresh produce.

It must also be remembered that whilst significant quantities of fresh produce is eaten essentially immediately (i.e within a few days), much is frozen and hence any packaging material employed in transport and storage must be suitable for both home and industrial freezing, e.g. down to temperatures as low as -40°C. Moreover, many food consumers now require foods to be packaged in ways which simplify any cooking process, e.g. boil in the bag products or microwaveable products. Ideally therefore, packaging material for fresh produce should be capable of being boiled or microwaved.

A variety of different packaging alternatives are currently used for the packaging of fresh produce. For example, fish to be frozen is packaged in plastic or corrugated board containers, e.g. expanded polystyrene containers, or on a coated cardboard or plastic support. The support or container is most often supplied with a thin polyolefin film liner and the entire assembly then frozen rapidly to -40°C.

Much fresh meat is packaged in non-sealed polystyrene containers covered only by a polyolefin cling film, i.e. one that adheres to the container.

Lettuce is often packaged in non-sealed plastic wrappers thus limiting its shelf life.

There remains a need therefore to design improved packaging for fresh produce, e.g. fish, in particular to try to eliminate the need for cardboard or plastic containers or supports. Such items are voluminous, expensive to manufacture and are often environmentally unfriendly and packaging operations using such containers are complicated and relatively costly.

An alternative to the containers or supports mentioned above is a film comprising a polyethylene layer and a polyester (PET), ethylene vinyl alcohol (EVOH) or polyamide (PA) layer. Such films can be made by lamination and exhibit good thermal resistance and also act as barrier films. Barrier films prevent the diffusion of liquids or gases (such as water vapour, oxygen or carbon dioxide) from or into the product. Water vapour has low permeability through both polyethylene while gasses such as oxygen, carbon dioxide and nitrogen penetrate polyethylene readily. PET, EVOH and PA films have low permeability to these gasses but both polyamide and EVOH are hygroscopic. It is typical therefore that films used for packaging of fresh food products will be packed in a multilayer film comprising PE + PA or EVOH in order to minimise ingress of gasses, in particular oxygen. Meat and vegetables such as potatoes and salads are packed in these films today.

However, terephthlate, EVOH and polyamide polymers are expensive which is a serious drawback.

The inventors have surprisingly found a particular polyolefin film suitable for the packaging of seafood and meat which is capable of replacing entirely currently employed packaging materials. Hence, the film is capable of replacing either film lined containers or PA/PET/EVOH films giving rise to a flexible sealed pack which is easy to transport and store. Moreover, the film of the invention is suitable for freezing, microwaving and boiling.

The film of the invention is a multilayer film comprising polyethylene and polypropylene layers. US 4460631 describes a sealable biaxially stretched film having high scratch resistance formed from, for example, an isotactic polypropylene and a polyethylene homo or copolymer with propylene. Such a film is useful for packaging dry foodstuffs such as pasta and rice. Never before, however, have the films of the invention been proposed for use in the packaging of meat or seafood.

Hence, viewed from one aspect the invention provides a method for the packaging of meat or seafood in which the meat or seafood is packaged on a packaging line using a multilayer film having at least a first layer and a sealing layer, said first layer comprising a heterophasic polypropylene block copolymer and said sealing layer comprising a polyethylene polymer wherein the package is frozen immediately after packaging.

The term "meat" used herein refers to chicken, duck, pork, beef, rabbit, lamb/mutton, venison etc and other edible animals. The term "seafood" as used herein covers all edible marine produce such as fish, shellfish (prawns, crayfish, shrimp etc), crab, lobster, squid, scallops etc.

It is preferred if the films of the invention are used to package seafood. Most preferably however, the invention concerns the packaging of sea or freshwater fish such as cod, haddock, whiting, salmon, trout, plaice, turbot, bass, tuna, swordfish, mackerel, hake, eel, snapper, skate, herring, catfish, dogfish, marlin, etc. The films may also be used to package fish cakes or other prepared seafood products.

The sealing layer must be present on an outer surface of the multilayer film so that it can be subjected to heat to form a seal around the product being packaged. The films of the invention exhibit particularly beneficial sealing properties since any aqueous contaminants present where the seal is being formed can be evaporated as the sealing process is carried out. When a product such as a fish is transferred onto the film prior to sealing it is inevitable that the sealing area will become contaminated with water, blood, oils etc from the fish which could detrimentally affect the sealing procedure. Since the films of the invention can be sealed at relatively high temperatures, e.g. greater than 130°C, water and the like is evaporated during the sealing process giving rise to a much more effective seal. The ability to seal at these temperatures whilst maintaining film integrity in a 100% polyolefin film such as those of the invention is new and forms an important aspect of the invention. The combination of a polyethylene polymer and polypropylene polymer in a multilayer film provides these benefits.

The sealing layer comprises a polyethylene polymer. By polyethylene polymer is meant a polymer in which at least 70%, preferably at least 80%, especially at least 90% by weight of the polymer is made up from ethylene monomer units. In one embodiment, the polyethylene polymer may be a homopolymer, i.e. where substantially all, e.g. at least 99.5% wt of the monomer units are derived from ethylene e.g. a low density polyethylene (LDPE). Suitable LDPE's have the following properties:

| | |
|---|---|
| Density: 910-930 kg/m³ | (ISO 1183) |
| MFR₂ : 0.1 to 10 g/10min | (ISO 1133) |
| Melting Temperature: 100 to 130°C | (ISO 11357/03) |

However in a preferred embodiment, the sealing layer comprises a polyethylene copolymer or terpolymer with a C₃₋₁₀-alpha-olefin. Suitable comonomers are propylene, 1-butene, 1-pentene, 1-hexene and 1-octene of which butene, hexene and octene are preferred. Moreover, it is preferred if the copolymer is an LLDPE. Suitable LLDPE's can be produced using Ziegler-Natta or metallocene catalysis with MWD (Mw/Mn) between 2-20 and MFR₂ of 0.1 to 10 g/10 min. LLDPE polymers which have a bimodal molecular weight distribution are ideally suited when packaging operations involve deep drawing and low temperatures.

The amount of comonomer present in the polyethylene copolymer may vary from 0.1% to 15% by weight, preferably 5% to 10% by weight.

LLDPE's of use in the sealing layer are preferably manufactured employing normal Ziegler-Natta catalysts or single site catalysts as is known in the art and have the following properties:

| | |
|---|---|
| Density: 910-930 kg/m³ | (ISO 1183) |
| MFR₂ : 0.1 to 10 g/10min | (ISO 1133) |
| Melting Temperature: 100 to 130°C | (ISO 11357/03) |

Various commercially available polymers may be used as the LDPE or LLDPE in the sealing layer of the invention. Potential polymers include Borstar FB2230, FB2310, FA5224, FG5190 (Borealis), ELITE 5400G (Dow) and Dowlex 2045E (Dow).

In a more preferred embodiment, the sealing layer may be a mixture of polyethylene polymers, e.g. a mixture of two polymers or three polymers. For example, the sealing layer could be formed from a mixture of LDPE's, LLDPE's or from the combination of an LLDPE and an LDPE.

A particularly suitable sealing layer is formed from a mixture of LLDPE polymers as described previously above, e.g. Borstar FB2230 and Elite 5400G. It is preferred if one LLDPE is a single site catalyst produced LLDPE (mLLDPE) due to its high seal strength and hot tack properties. A second LLDPE may be a Ziegler Natta LLDPE which may help to minimise the cost of the film. Preferred mLLDPE's have 1-hexene or 1-octene as a comonomer whereas preferred Ziegler-Natta LLDPE's employ butene or hexene as a comonomer.

Where two LLDPE or LDPE polymers are employed in the sealing layer each may form up to 99 wt% of the sealing layer. Preferably however each LLDPE should form up to 80wt% of the sealing layer. Wherever possible however, the skilled man will maximise the presence of the Ziegler-Natta LLPDE to minimise costs and this should preferably form the bulk of the sealing layer. The ratio of Ziegler LLDPE to mLLDPE may therefore be from 2:1 to 5:1, e.g. the Ziegler-Natta LLDPE will form at least 75 wt% of the sealing layer.

An alternative and still yet further preferred embodiment involves a two or three polymer sealing layer comprising one or two polyethylene polymers and a polyethylene copolymer with a polar comonomer (from hereon a polar copolymer) such as an acetate or an acrylate. Preferred are acrylate comonomers of which butyl acrylate and especially methyl acrylate are especially favoured.

It is believed the polar copolymer aids adhesion between the various layers of the multilayer film. The polar copolymer should preferably comprise between 1% to 40% by weight comonomer, e.g. 5 to 35%, more preferably 10 to 25% by weight.

Where a mixture of polyethylene polymer and polar copolymer is employed as the sealing layer, the polar copolymer should form between 5 to 25% by weight of the sealing layer, preferably 10 to 20% by weight. The LLDPE polymer or polymers should therefore form 75 to 95% by weight of the sealing layer in this embodiment, e.g. 80 to 90%. The sealing layer may consist essentially of LLDPE and the polar copolymer (i.e. only additionally includes standard additives/preservatives etc).

The first layer should comprise a heterophasic polypropylene block copolymer, preferably a polypropylene copolymer with a C₂₋₁₀-alpha-olefin comonomer such as ethylene, butene or hexene, especially ethylene. By polypropylene polymer is meant a polymer in which at least 70%, preferably at least 80% by weight of the polymer comprises propylene monomer units. Copolymers of propylene are preferred due to their superior toughness at low temperatures.

The amount of comonomer present may vary, however suitable ranges are from 1% to 30%, preferably 5 to 10% by weight.

Heterophasic block copolymers will give the best low temperature toughness and hence be best suited for frozen packs. Suitable polymers have the properties below and can be made using Ziegler-Natta or single site catalysis often in a two stage polymerisation using conventional techniques:

| | |
|---|---|
| Density: 890-920 kg/m³ | (ISO 1183) |
| MFR₂:0.05 to 2 g/10min | (ISO 1133) |
| Melting Temperature: 140 to 180°C | (ISO 3146) |

Commercially available copolymers include BHC5012 (Borealis), BA110CF, RB707CF and RB501BF (Borealis).

The first layer may also comprise a mixture of polymers as long as one is a heterophasic polypropylene block copolymer. Preferred additional polymers include LDPE or LLDPE polymers such as those described above in connection with the sealing layer. Preferred in this regard are mLLDPE's.

Where such a mixture is present, it is preferred if the polypropylene copolymer forms 75 to 95% by weight of the first layer. The LLDPE or LDPE polymer may form between 5 to 25%, e.g. 8 to 18 % by weight of the first layer.

Whilst the polymer film used in this invention should comprise a sealing layer and a first layer (i.e. at least a bilayer film), the film may also comprise further layers. For example, a preferred film comprises three layers, a sealing layer, first layer and further sealing layer, e.g. arranged such that the sealing layers sandwich the first layer. A second sealing layer may be different from or identical to the first sealing layer and have a structure as described above in connection with the main sealing layer. Conveniently however, both sealing layers will be identical. A three layer film in which the first layer is sandwiched between two sealing layers is believed to curl less than a two layer film having only a first and sealing layer.

At least one sealing layer must always be outmost to allow sealing to be effected.

The combination of the sealing layer and first layer of the invention gives rise to a film which exhibits high temperature heat resistance and hence integrity during heat sealing as well as an advantageous sealing temperature, i.e. sufficient to allow evaporation of water etc from the sealing areas of the film and an advantageous heat sealing range. Hence, due to the integrity of the film at higher temperatures, it is possible to heat seal the film safely at higher temperature.

The films of the invention should preferably have a heat sealing range of at least 25°C, especially at least 30°C, most preferably at least 40°C (measured as described in the examples).

Moreover, the films of the invention are preferably heat sealable at temperatures greater than 180°C.

The films also exhibit high mechanical strength particularly at low temperature (e.g. -40°C). Thus, the films of the invention exhibit very high protrusion puncture probe test results (ASTM D5748) in particular over a broad temperature range. Thus for a 130 *µ*m film, maximum force is preferably greater than 170N, more preferably greater than 200N.

The films of the invention can be manufactured using conventional coextrusion and film blowing technology or via lamination. Hence the various layers can be coextruded through a suitable die as is known in the art. Alternatively, the layers could be laminated, e.g. using a polyurethane adhesive however, this is not preferred since coextrusion is a simpler technique.

The polymers used in the multilayers films may be bought commercially from polymer suppliers or manufactured using conventional polymerisation techniques. Thus, polymers manufactured using single site catalysts employ procedures well known in the art. Published patent applications by Exxon, Hoechst, Phillips, Dow, Chisso, Mitsui, Fina, BASF, Mitsubishi, Mobil, BASF, Montell, DSM and Borealis, e.g. WO96/23010, WO98/49208, WO99/12981, WO99/19335, WO97/28170, EP-A-423101, EP-A-537130 all have descriptions of the use of these catalysts.

Alternatively, the polymers may be made using Ziegler-Natta catalysts e.g. in Borealis' Borstar® polymerisation technology or known high pressure radical polymerisation technologies.

The multilayer film should be approximately 50 to 500 microns in thickness, e.g. 80 to 250 microns. Typically, the polypropylene layer is approximately twice as thick as the sealing layer(s).

The films of the invention are applicable for packaging lines where the product is frozen immediately after packaging. The invention is thus of most importance for packaging meat and fish which is frozen for both industrial and consumer consumption.

The actual packaging process may be a form, fill and seal (FFS) process, deep draw process or tray lidding process. FFS and deep draw processes are preferred, especially deep draw.

FFS involves packaging machines that use heat sealable flexible plastic packaging film to form a package, which is then filled, heat-sealed and cut off. There are two basic types, horizontal and vertical. A horizontal machine forms a package, fills with product and seals, and all in a sequence of operations while the film is being transported in a horizontal direction. They are widely used for packaging solid foodstuffs. A vertical machine forms a tube, fills and seals, all in a sequence of operations while the film is being transported vertically downwards. They are widely used for packaging foodstuffs in a liquid, powder, paste or granule state.

Thus viewed from one aspect the invention provides a process for packaging meat or seafood comprising forming an open package using a multilayer film as hereinbefore defined, filling said package with said meat or seafood, and heat-sealing the package and immediately freezing the package.

In a deep draw process the film of the invention is deep drawn into a suitable container in which the meat or seafood is placed. Sealing of the container may be effected by using further film of the invention and sealing as necessary. It is most surprising that the films of the invention are suitable for use in a deep draw process.

Thus, viewed from a further aspect, the invention provides a process for packaging meat or seafood comprising:
(I) Deep drawing a multilayer film as hereinbefore described to form a container;
(II) placing said meat or seafood in said container; and
(III) heat sealing the container with a second multilayer film as hereinbefore defined;
(iv) immediately freezing the container.

In a tray lidding process, a preformed tray, made from conventional material, may be sealed using the film of the invention.

Surprisingly, in the FFS process, it is envisaged that a sealing layer formed entirely from mLLDPE can be employed.

Certain films of use in the invention are themselves new and form a further aspect of the invention. Hence, viewed from a further aspect the invention provides a multilayer film having a first layer and a sealing layer, said first layer comprising a heterophasic polypropylene block copolymer with a C₂₋₁₀₋alpha olefin comonomer and said sealing layer comprising an LLDPE and an ethylene acrylate copolymer, e.g. EMA polymer.

The raw materials used to make the films may also contain standard additives such as antioxidants, antiblocking agents, antic static agents, slip agents, pigments, dyes etc. A number of the commercially available polymer grades of use in this invention already comprise one or more of these additives.

The invention will now be described with reference to the following non-limiting examples.

### Experimental:

The films were prepared using the following equipment:
Extruder: Windmöller & Hölscher, coextrusion blown film line with IBC (internal bubble cooling).
3-layer, A/B/C, barrier screw
Typical thickness distribution: 25% / 50% / 25%
Die gap 1,2mm
Die ∅ 200mm
Blow up ratio film 3:1
Temperature settings on the extruders 180°C - 240°C

### General Packaging Protocol

Films 1 to 4 described in the examples below were tested on a commercially available packaging machine, Repak RE 3 model from year 2000/2001. A first film with 220*µ*m thickness was heated and deep drawn to form a tray, filled with fresh herring and a second film with 120*µ*m thickness was sealed on top making a lid.

### Comparative Example 1

A coextruded film with three layers was prepared using the materials below:
**Sealing layer:** 100% PE-LLDPE - Borstar FB2230
**First layer:** 100% PE-LLDPE - Borstar FB2230
**Outside layer:** 100% PE-LLDPE - Borstar FB2230

At normal sealing temperature settings for PE (145 to 155°C) the seal delaminated due to the presence of contaminants. When increasing the sealing temperature to 160°C, holes appeared beside the seals leading to package failures.

### Comparative Example 2

A coextruded film with three layers was prepared using the materials below:
**Sealing layer :** 100% PE-LLDPE - Borstar FB2230
**First layer:** 100% PE-HDPE - Borstar FB1460
**Outside layer:** 100% PE-LLDPE - Borstar FB2230

At normal sealing temperature settings for PE (145 to 155°C) the seal delaminated due to the presence of contaminants. When increasing the sealing temperature to 160°C holes appeared beside the seals leading to package failures. This despite the fact that HDPE with higher melting point was used in the first layer providing better heat resistance.

### Example 3

A coextruded film with three layers was prepared using the materials below:
- **Sealing layer:**: PE-LLDPE - Borstar FB2230 (70%) + PE LLDPE-mLLDPE - Dow Elite 5400 (15%) + PE Copolymer with methyl acrylate - DuPont Elvaloy 1224AC (15%)
- **First Layer:**: PP heterophasic Copolymer - Borealis BHC 5012 (85%) + PE LLDPE-mLLDPE - Dow Elite 5400 (15%)
- **Second sealing: Layer**: PE-LLDPE - Borstar FB2230 (70%) + PE LLDPE-mLLDPE - Dow Elite 5400 (15%) + PE Copolymer with methyl acrylate - DuPont Elvaloy 1224AC (15%)

At normal sealing temperature settings for PE (145 to 155°C) the seal delaminated due to the presence of contaminants. When the sealing temperature was increased to 160 to 165°C a perfect/strong seal could be achieved with no delamination or holes appearing beside the seals.

### Example 4

A coextruded film with two layers was prepared using the materials below:
- **Sealing layer:**: PE-LLDPE - Borstar FB2230 (70%) + PE LLDPE-mLLDPE - Dow Elite 5400 (15%) + PE Copolymer with methyl acrylate - DuPont Elvaloy 1224AC (15%)
- **First Layer:**: PP heterophasic Copolymer - Borealis BHC 5012 (85%) + PE LLDPE-mLLDPE - Dow Elite 5400 (15%)

At normal sealing temperature settings for PE (145 to 155°C) the seal delaminated due to the presence of contaminants. When the sealing temperature was increased to 160 to 165°C, a perfect/strong seal could be achieved with no delamination or holes appearing beside the seals.

### Example 5

The mechanical performance of films has been analysed at +23°C and -40°C by the Protrusion Puncture Probe Test according to ASTM D5748 in order to demonstrate the superior mechanical performance of films of this invention over a broad temperature range and their suitability for packaging of goods to be frozen. The films of example 1 and 3 were compared with the following film and that of Example 6. All films had a total film thickness of 130*µ*m. The results are presented in Table 1.

### Film of Example 5

**Sealing layer:** 100% PE-LLDPE - Borstar FB2310
**First layer:** 100% PE-LLDPE - Borstar FB2310
**Outside layer:** 100% PE-LLDPE - Borstar FB2310

### Example 6

Nordform 213 from Nordpak OY, Finland, a commercially available multilayer laminate consisting of several layers of polyethylene and polyamide with adjacent layers of adhesive polymer commonly used for food packaging.

**Table 1 - results ASTM D5748**

| Film No. | Ex 1 | Ex 3 | Ex 5 | Ex 6 |
|---|---|---|---|---|
| Temperature (°C) | 23 | 23 | 23 | 23 |
| Max force (N) | 120 | 220 | 132 | 164 |
| Elongation at max force (mm) | 71 | 103 | 74 | 52 |
| Absorbed energy at max force (Nmm) | 5346 | 13803 | 6211 | 4784 |
| | | | | |

| Film No. | Ex 1 | Ex 3 | Ex 5 | Ex 6 |
|---|---|---|---|---|
| Temperature (°C) | -40 | -40 | -40 | -40 |
| Max force (N) | 184 | 202 | 158 | 179 |
| Elongation at max force (mm) | 37 | 39 | 41 | 29 |
| Absorbed energy at max force (Nmm) | 3915 | 4751 | 3834 | 2678 |

### Example 7

The sealing behaviour of films has been analysed with a Toyoseiko type HG-100 according to the following procedure:
(I) Two films are sealed to each other at a sealing temperature T (°C), sealing pressure of 2 bar and sealing time of 4 seconds.
(II) The sealing temperature T (°C) is varied in steps of 5°C between 120-180°C, the latter representing the maximum temperature of the used apparatus.
(III)The seal integrity is tested by pulling one end from each of the two films apart with a tensile tester.
(IV) At lower temperatures the seal will de-laminate or open due to lack of proper sealing
(V) The seal initiation temperature (T¹) is the lowest temperature when the seal is not de-laminating but the film is elongating and breaking at a random place.
(VI) The maximum sealing temperature is exceeded when one of the films snaps off at the edge of the seal. The recorded maximum seal temperature (T²) is defined as 5°C lower than this snap-off temperature.
(VII) The sealing range is defined as SR=T²-T¹

The films of Examples 1, 2 and 3 all with a total film thickness of 120*µ*m, were compared and results presented in Table 2.

**Table 2**

| Film No. | Ex 1 | Ex 2 | Ex 3 |
|---|---|---|---|
| Seal initiation temperature(°C)T¹ | 145 | 145 | 140 |
| Max sealing temperature (°C) T² | 150 | 175 | >180 |
| Sealing range T²-T¹ | 5 | 30 | >40 |

### Example 8

The film of Example 3 was used for packaging of lettuce on a commercial packaging machine from SFK of Denmark in order to demonstrate the suitability of the film of the invention.

A first film with 220*µ*m thickness was heated and deep drawn to form a 20cm deep tray, filled with 1 piece of lettuce and a second film with 70*µ*m thickness was sealed (155°C) on top making a lid. The seal integrity was afterwards tested by cutting a 25mm strip of film and loaded with 100N in a conventional tensile testing equipment.

### Result

The film could be deep drawn without thin spots or holes, the seal had no leakage and did not delaminate during tensile testing.

### Example 9

The film below was used for packaging of pre-boiled potatoes in water on a commercial packaging machine, Tiromat Powerpack 620, 2001 model, in order to demonstrate the suitability of the film of the invention in the packaging operation and for reheating of the potatoes - still in the package - in boiling water as well as in a microwave oven.
- **Sealing layer:**: PE-LLDPE - Borstar FB2230 (85%) + PE-LLDPE-mLLDPE - Dow Elite 5400 (15%)
- **First layer:**: PP Heterophasic Copolymer - Borealis BHC5012 (85%) + PE-LLDPE-mLLDPE - Dow Elite 5400 (15%)
- **Second sealing Layer:**: PE-LLDPE - Borstar FB2230 (85%) + PE-LLDPE-mLLDPE - Dow Elite 5400 (15%)

A first film with 170*µ*m thickness was heated and deep drawn to form a 5cm deep tray, filled with 9 pre-boiled potatoes and a second film with 100*µ*m thickness was sealed (130°C) on top making a lid while being under vacuum. The packs were heated and tested in the following ways:

### A - In water

The pack with potatoes was put into boiling water and kept there for 10 minutes.
The packs showed no deformation or change in its shape.
The packs maintained the vacuum.
The packs could not be torn open by hand.
The potatoes were entirely warm and had a fully acceptable taste and texture.
This procedure was repeated for 10 packages with same result.

### B - In microwave oven

The pack with potatoes was heated in a conventional microwave oven at 350watt for 10 minutes.
The packs showed no deformation or change in its shape.
The packs maintained the vacuum.
The packs could not be torn open by hand.
The potatoes were entirely warm and had a fully acceptable taste and texture.
This procedure was repeated for 10 packages with same result.

The film could be deep drawn without thin spots or holes, the seal had no leakage and did not delaminate during tensile testing. Heating in did not damage the packaging.

## Claims

1. A method for the packaging of meat or seafood in which the meat or seafood is packaged on a packaging line using a multilayer film having at least a first layer and a sealing layer, said first layer comprising a heterophasic polypropylene block copolymer and said sealing layer comprising a polyethylene polymer wherein the package is frozen immediately after packaging.

2. A method as claimed in claim 1 for the packaging of fish.

3. A method as claimed in claim 1 to 2 wherein said heterophasic polypropylene polymer is a copolymer of propylene with a C₂₋₁₀-alpha olefin.

4. A method as claimed in any one of claims 1 to 3 wherein said sealing layer comprises an LDPE or LLDPE.

5. A method as claimed in claim 4 wherein said sealing layer comprises an LDPE or LLDPE and a polyethylene copolymer with a polar comonomer.

6. A method as claimed in claim 5 wherein said polar comonomer is an acrylate comonomer.

7. A method as claimed in any one of claims 1 to 6 wherein said sealing layer comprises an LLDPE.

8. A method as claimed in claim 7 wherein said sealing layer comprises an mLLDPE and an LLPDE made by Ziegler-Natta catalysis.

9. A method as claimed in any one of claims 1 to 8 wherein said propylene copolymer is a heterophasic ethylene propylene copolymer.

10. A method as claimed in any one of claims 1 to 9 wherein said first layer comprises an LLPDE.

11. A method as claimed in any one of claims 1 to 10 wherein said multilayer film has 3 layers.

12. A method as claimed in claim 11 wherein said three layer film contains two identical sealing layers sandwiching a first layer.

13. A method as claimed in claim 1 to 12 further comprising coextruding said first layer and a sealing layer, said first layer comprising a heterophasic polypropylene copolymer with a with a C₂₋₁₀-alpha olefin comonomer and said sealing layer comprising an LLDPE and an ethylene acrylate copolymer, and blowing the extrudate to form said multilayer film.

14. A method as claimed in any one of claims 1 to 13 comprising:
(I) Deep drawing said multilayer film to form a container;
(II) placing said meat or seafood in said container;
(III) heat sealing the container with a second multilayer film as defined in any one of claims 1 to 11; and
(IV) immediately freezing the container.

15. A method as claimed in any one of claims 1 to 13 comprising forming an open package using said multilayer film, filling said package with said meat or seafood, heat-sealing the package and immediately freezing the package.

16. A multilayer film having a first layer and a sealing layer, said first layer comprising a heterophasic polypropylene block copolymer with a C₂₋₁₀-alpha olefin comonomer and said sealing layer comprising an LLDPE and an ethylene acrylate copolymer.

## Revendications

1. Procédé pour l'emballage de viandes ou de produits de la mer, dans lequel la viande ou les produits de la mer sont emballés sur une ligne d'emballage en utilisant un film à plusieurs couches ayant au moins une première couche et une couche de scellage, ladite première couche comprenant un copolymère séquencé de polypropylène hétérophasique et ladite couche de scellage comprenant un polymère de polyéthylène dans lequel le produit emballé est congelé immédiatement après l'emballage.

2. Procédé selon la revendication 1, pour l'emballage de poissons.

3. Procédé selon les revendications 1 à 2, dans lequel ledit polymère de polypropylène hétérophasique est un copolymère de propylène avec une α-oléfine en C₂-C₁₀.

4. Procédé selon l'une quelconque des revendications 1 à 3, dans lequel ladite couche de scellage comprend un LDPE ou un LLDPE.

5. Procédé selon la revendication 4, dans lequel ladite couche de scellage comprend un LDPE ou un LLDPE et un copolymère de polyéthylène avec un comonomère polaire.

6. Procédé selon la revendication 5, dans lequel ledit comonomère polaire est un comonomère d'acrylate.

7. Procédé selon l'une quelconque des revendications 1 à 6, dans lequel ladite couche de scellage comprend un LLDPE.

8. Procédé selon la revendication 7, dans lequel ladite couche de scellage comprend un mLLDPE ou un LLDPE préparé par catalyse de Ziegler-Natta.

9. Procédé selon l'une quelconque des revendications 1 à 8, dans lequel ledit copolymère de propylène est un copolymère d'éthylène-propylène hétérophasique.

10. Procédé selon l'une quelconque des revendications 1 à 9, dans lequel ladite première couche comprend un LLPDE.

11. Procédé selon l'une quelconque des revendications 1 à 10, dans lequel ledit film à plusieurs couches possède 3 couches.

12. Procédé selon la revendication 11, dans lequel ledit film à trois couches contient deux couches de scellage identiques prenant en sandwich une première couche.

13. Procédé selon l'une quelconque des revendications 1 à 12, comprenant en outre la coextrusion de ladite première couche et d'une couche de scellage, ladite première couche comprenant un copolymère de polypropylène hétérophasique avec comonomère de α-oléfine en C₂₋C₁₀ et ladite couche de scellage comprenant un LLDPE et un copolymère d'acrylate d'éthylène, et le soufflage de l'extrudat pour former ledit film à plusieurs couches.

14. Procédé selon l'une quelconque des revendications 1 à 13, comprenant :
(I) le formage profond dudit film à plusieurs couches pour former un contenant ;
(II) le placement de ladite viande ou dudit produit de la mer dans ledit contenant ;
(III) le thermoscellage du contenant avec un deuxième film à plusieurs couches tel que défini selon l'une quelconque des revendications 1 à 11 ; et
(IV) la congélation immédiate du contenant.

15. Procédé selon l'une quelconque des revendications 1 à 13, comprenant la formation d'un emballage ouvert en utilisant ledit film à plusieurs couches, le remplissage dudit emballage avec ladite viande ou ledit produit de la mer, le thermoscellage de l'emballage et la congélation immédiate de l'emballage.

16. Film à plusieurs couches ayant une première couche et une couche de scellage, ladite première couche comprenant un copolymère séquencé de polypropylène hétérophasique avec comonomère de α-oléfine en C₂-C₁₀ et ladite couche de scellage comprenant un LLDPE et un copolymère d'acrylate d'éthylène

## Patentansprüche

1. Verfahren zum Verpacken von Fleisch oder Meeresfrüchten, bei dem das Fleisch oder die Meeresfrüchte auf einer Verpackungsanlage unter Verwendung einer mehrschichtigen Folie mit zumindest einer ersten Schicht und einer Versiegelungsschicht abgepackt werden, wobei die erste Schicht ein Polypropylen-Blockcopolymer mit verschiedenen Phasen umfaßt und die Versiegelungsschicht ein Polyethylenpolymer umfaßt, wobei die Packung unmittelbar nach dem Verpacken eingefroren wird.

2. Verfahren nach Anspruch 1 zum Verpacken von Fisch.

3. Verfahren nach Anspruch 1 oder 2, wobei das Polypropylenpolymer mit verschiedenen Phasen ein Copolymer von Propylen mit einem C₂₋₁₀-α-Olefin ist.

4. Verfahren nach einem der Ansprüche 1 bis 3, wobei die Versiegelungsschicht ein LDPE oder LLDPE umfaßt.

5. Verfahren nach Anspruch 4, wobei die Versiegelungsschicht ein LDPE oder LLDPE und ein Polyethylen-Copolymer mit einem polaren Comonomer umfaßt.

6. Verfahren nach Anspruch 5, wobei das polare Comonomer ein Acrylatcomonomer ist.

7. Verfahren nach einem der Ansprüche 1 bis 6, wobei die Versiegelungsschicht LLDPE umfaßt.

8. Verfahren nach Anspruch 7, wobei die Versiegelungsschicht ein mLLDPE und ein LLPDE umfaßt, das durch Ziegler-Natta-Katalyse hergestellt ist.

9. Verfahren nach einem der Ansprüche 1 bis 8, wobei das Propylencopolymer ein Ethylen-Propylen-Copolymer mit verschiedenen Phasen ist.

10. Verfahren nach einem der Ansprüche 1 bis 9, wobei die erste Schicht ein LLPDE umfaßt.

11. Verfahren nach einem der Ansprüche 1 bis 10, wobei die mehrschichtige Folie drei Schichten aufweist.

12. Verfahren nach Anspruch 11, wobei die dreischichtige Folie zwei identische Versiegelungsschichten umfaßt, zwischen denen eine erste Schicht angeordnet ist.

13. Verfahren nach Anspruch 1 bis 12, das ferner das Coextrudieren der ersten Schicht und einer Versiegelungsschicht, wobei die erste Schicht ein Polypropylen-Copolymer mit verschiedenen Phasen mit einem C₂₋₁₀-α-Olefin-Comonomer umfaßt und die Versiegelungsschicht ein LLDPE und ein Ethylen-Acrylat-Copolymer umfaßt, und das Blasen des Extrudats umfaßt, wodurch die mehrschichtige Folie erzeugt wird.

14. Verfahren nach einem der Ansprüche 1 bis 13, umfassend:
(I) Tiefziehen der mehrschichtigen Folie, wodurch ein Behälter erzeugt wird;
(II) Anordnung des Fleischs oder der Meeresfrüchte in dem Behälter;
(III) Heißversiegeln des Behälters mit einer zweiten mehrschichtigen Folie nach einem der Ansprüche 1 bis 11; und
(IV) sofortiges Einfrieren des Behälters.

15. Verfahren nach einem der Ansprüche 1 bis 13, das das Erzeugen einer offenen Packung unter Verwendung dieser mehrschichtigen Folie, das Füllen dieser Packung mit dem Fleisch oder den Meeresfrüchten, das Heißversiegeln der Packung und das sofortige Einfrieren der Packung umfaßt.

16. Mehrschichtige Folie mit einer ersten Schicht und einer Versiegelungsschicht, wobei die erste Schicht ein Polypropylen-Blockcopolymer mit verschiedenen Phasen mit einem C₂₋₁₀-α-Olefin-Comonomer umfaßt und die Versiegelungsschicht ein LLDPE und ein Ethylen-Acrylat-Copolymer umfaßt.
